# EUROPÄISCHE PATENTANMELDUNG

(11) **EP 1 669 258 A1**
(43) Veröffentlichungstag der Anmeldung: **14.06.2006**
(21) Anmeldenummer: 04029065.2
(22) Anmeldetag: 08.12.2004
(51) Int. Cl.: B60R 21/26

(54) **Gasgenerator**

(71) Anmelder: Delphi Technologies, Inc., Troy, MI 48007 (US)
(72) Erfinder: Blessing, Uwe, 90409 Nürnberg (DE); Gärtner, Jochem, 90408 Nürnberg (DE); Lehniger, Peter, 91059 Erlangen (DE); Winterhalder, Marc Alexander, 84518 Garching/Alz (DE)
(74) Vertreter: Manitz, Finsterwald & Partner GbR

(57) **Zusammenfassung**

Die vorliegende Erfindung betrifft einen Gasgenerator, insbesondere für Luftsackmodule in Kraftfahrzeugen, mit zwei unabhängig voneinander zündbaren Generatorstufen (20,30), die jeweils in einem Druckgehäuse (26,36) wenigstens einen Zünder (22,32), zumindest eine Treibladung und wenigstens eine Brennkammer (24,34) umfassen. Die beiden Generatorstufen sind zumindest teilweise zusammen mit einer gemeinsamen, außerhalb der Druckgehäuse angeordneten Filtereinheit (50) in einem gemeinsamen Filtergehäuse (56) angeordnet, und eine erste Generatorstufe (20) ist kreisringförmig ausgebildet. Eine zweite Generatorstufe (30) ist zentral bezüglich der ersten Generatorstufe angeordnet und zumindest teilweise oberhalb der ersten Generatorstufe gelegen.

## Beschreibung

Die vorliegende Erfindung betrifft einen Gasgenerator, insbesondere für Luftsackmodule in Kraftfahrzeugen, mit zwei unabhängig voneinander zündbaren Generatorstufen, die jeweils in einem Druckgehäuse wenigstens einen Zünder, zumindest eine Treibladung und wenigstens eine Brennkammer umfassen.

Derartige mehrstufige Gasgeneratoren sind aus dem Stand der Technik bereits bekannt. In Abhängigkeit von den jeweiligen Anforderungen können eine oder mehrere Generatorstufen gezündet werden. Der gleiche Gasgenerator kann bei Fahrzeuganwendungen somit für verschiedene Luftsackmodule und verschiedene Fahrzeugtypen verwendet werden. Mit Hilfe einer entsprechenden Steuerung kann aber auch bei einem mit einem Luftsackmodul in einem Fahrzeug installierten Gasgenerator in Abhängigkeit von der Stärke des Aufpralls, anderen Unfallbedingungen oder der Benutzungssituation, z.B. der Art der Sitzbelegung, entschieden werden, welche Generatorstufen zu welchem Zeitpunkt gezündet werden.

Aus der US 2003/0057688 A1 ist ein zweistufiger Gasgenerator bekannt, bei dem eine zylindrische Brennkammer im Zentrum einer zweiten, ringförmigen Kammer sitzt. Die zylindrische Kammer ist höher als die ringförmige äußere Kammer, und ein ringförmiger Filter ist auf der ringförmigen Kammer um die zylindrische Kammer herum angeordnet. Ein Filtergehäusedeckel begrenzt von oben sowohl ein ringförmiges Filtergehäuse als auch die zentrale Brennkammer.

Bei solchen mehrstufigen Gasgeneratoren muss durch die geometrische Anordnung und die Gestaltung der einzelnen Generatorstufen verhindert werden, dass beim Zünden einer Generatorstufe auch die Treibladung der anderen Generatorstufe unbeabsichtigt gezündet wird (sympathetic ignition). Die Gehäuse der einzelnen Generatorstufen müssen also entsprechend voneinander isoliert sein, wobei aber gleichzeitig das Gewicht des Gasgenerators möglichst gering bleiben soll. Da es sich bei derartigen Gasgeneratoren um in sehr hoher Stückzahl gefertigte Massenprodukte handelt, soll zudem die Herstellung des Generators trotz dieser oben erwähnten Anforderungen möglichst einfach sein. Insbesondere sollen möglichst wenig unterschiedliche Teile zum Einsatz kommen.

Die Aufgabe der vorliegenden Erfindung ist es daher, einen möglichst leichten und kompakten Gasgenerator der eingangs genannten Art zur Verfügung zu stellen, der einfach und kostengünstig hergestellt werden kann und bei dem ein unbeabsichtigtes Auslösen des Verbrennungsvorgangs in der jeweils anderen Brennkammer (sympathetic ignition) sicher vermieden wird.

Diese Aufgabe wird erfindungsgemäß dadurch gelöst, dass die beiden Generatorstufen zumindest teilweise zusammen mit einer gemeinsamen, außerhalb der Druckgehäuse angeordneten Filtereinheit in einem gemeinsamen Filtergehäuse angeordnet sind, und dass eine erste Generatorstufe kreisringförmig ausgebildet ist, und eine zweite Generatorstufe zentral bezüglich der ersten Generatorstufe angeordnet und zumindest teilweise oberhalb der ersten Generatorstufe gelegen ist.

Diese zumindest teilweise vorgesehene Anordnung der beiden Generatorstufen übereinander (so genanntes "stage-on-stage"-Design") spart Platz und ermöglicht eine insgesamt möglichst symmetrische Anordnung. Durch die Anordnung der beiden Generatorstufen in einem gemeinsamen, die Filtereinheit enthaltenden Filtergehäuse kann im Inneren des Filtergehäuses eine zusätzliche Kammer außerhalb der Brennkammern geschaffen werden, welche die Gase durchströmen müssen. Dabei werden sie nicht nur gefiltert, so dass ein möglichst partikelfreies Gas in den Luftsack gelangt, sondern können auch abkühlen. Da in dem außen liegenden Filtergehäuse ein geringerer Druck herrscht als in einem gleichzeitig als Brennkammer dienenden Gehäuse, werden an die Wandstärke des Filtergehäuses geringere Anforderungen gestellt, was die Herstellungskosten und auch das Gewicht senkt. Durch die Anordnung der Filtereinheit außerhalb des Druckgehäuses kann dieses außerdem relativ klein ausgeführt werden, wodurch wiederum Material und Gewicht eingespart werden. Es wurde erkannt, dass es nicht erforderlich ist, die Filtereinheit innerhalb eines Druckgehäuses anzuordnen, sondern dass es vielmehr genügt, ein vergleichsweise dünnwandiges Filtergehäuse vorzusehen, welches dann in vorteilhafter Weise außerdem dazu genutzt werden kann, bestimmte Zusatzfunktionen zu erfüllen.

Bevorzugte Ausführungsformen der Erfindung sind in den Unteransprüchen und in der Beschreibung in Verbindung mit der beigefügten Zeichnung beschrieben.

Nach einer bevorzugten Ausführungsform der Erfindung besitzt die zweite Generatorstufe die Form mehrerer, insbesondere zweier, koaxial übereinander angeordneter Zylinder mit unterschiedlichen Radien. Beispielsweise kann ein unterer Zylinder vorgesehen sein, dessen Radius dem Radius der im Folgenden auch als Innenraum bezeichneten zentralen Öffnung der kreisringförmigen ersten Generatorstufe entspricht, so dass der Innenraum des Rings optimal für die zweite Generatorstufe ausgenutzt wird.

Im Längsschnitt kann die zweite Generatorstufe eine Pilz- oder T-Form aufweisen. Dies ist beispielsweise dann der Fall, wenn die zweite Generatorstufe - wie oben beschrieben - aus einem unteren Zylinder kleineren Durchmessers, auf dem konzentrisch ein oberer Zylinder mit größerem Durchmesser angeordnet ist, gebildet ist.

Aus Gründen der Platzersparnis ist es vorteilhaft, die zweite Generatorstufe zumindest teilweise innerhalb des von der ersten Generatorstufe gebildeten Rings anzuordnen. Insbesondere kann die zweite Generatorstufe den Innenraum des genannten Rings vollständig ausfüllen.

Vorzugsweise ist das Volumen der ersten Generatorstufe größer als das der zweiten Generatorstufe. Selbstverständlich ist auch eine umgekehrte Dimensionierung denkbar. Im Allgemeinen wird man unterschiedlich große Volumina bevorzugen, um eine größere Auswahl an unterschiedlichen Zündszenarien zur Verfügung zu haben.

Nach einer weiteren bevorzugten Ausführungsform können die Druckgehäuse der beiden Generatorstufen wenigstens eine gemeinsame Wand aufweisen. Dadurch wird nicht nur Material und Gewicht gespart, sondern es kann auch die Herstellung des Gasgenerators vereinfacht werden.

Beispielsweise kann das Druckgehäuse der zweiten Generatorstufe von einer Wand des Druckgehäuses der ersten Generatorstufe und von einem insbesondere mittig auf das Druckgehäuse der ersten Generatorstufe aufgesetzten Deckelelement gebildet sein, welches den Innenraum des von der ersten Generatorstufe gebildeten Rings abdeckt. Auf diese Weise erhält man den oben bereits erwähnten pilzförmigen Längsschnitt, wobei der "Hut" des Pilzes von dem auf das Druckgehäuse der ersten Generatorstufe aufgesetzten Deckelelement gebildet ist, während der "Schaft" durch den zylindrischen Innenraum des von der ersten Generatorstufe gebildeten Rings ist. Diese Ausführungsform ist besonders vorteilhaft, da die Herstellung und Verbindung der beiden Druckgehäuse besonders einfach ist. Die beiden Druckgehäuse können aus nur zwei Gehäuseteilen und einer Bodenplatte zusammengesetzt werden, wobei das eine Gehäuseteil die kreisringförmige, oben geschlossene Struktur der ersten Generatorstufe bildet und das andere Gehäuseteil von dem Deckelelement gebildet wird, welches insbesondere zentral auf den Ring der ersten Generatorstufe aufgesetzt und mit diesem verschweißt werden kann.

Zwischen der ersten Generatorstufe und der Filtereinheit kann wenigstens ein Umlenkelement vorgesehen sein, welches insbesondere ringförmig ausgebildet sein kann. Ein solches vorzugsweise als dünnes Blech ausgebildetes Umlenkelement kann beispielsweise auf Ausströmöffnungen der ersten Generatorstufe aufliegen und das aus diesen ausströmende Gas so in die Filtereinheit lenken, dass es einerseits bereits vor der Filterung expandieren und somit abkühlen kann, und andererseits einen möglichst langen Filterweg zurücklegen muss. Bei geschickter Platzierung des Umlenkelements kann dieses von dem ausströmenden Gas so von den Ausströmöffnungen weg gedrückt werden, dass sich der Querschnitt des Strömungsweges in Abhängigkeit von dem Ausströmdruck einstellt, wodurch eine Druckstabilisierung erzielt wird.
Vorzugsweise füllen die Filtereinheit und die beiden Generatorstufen das Filtergehäuse zumindest im Wesentlichen vollständig aus. Dadurch wird eine optimale Platzausnutzung gewährleistet.

Eine besonders geschickte Anordnung sieht vor, dass die Filtereinheit oberhalb der ersten Generatorstufe angeordnet ist und insbesondere auf deren Druckgehäuse aufliegt.

Beispielsweise kann die Filtereinheit ringförmig ausgebildet sein und die zweite Generatorstufe umgeben. Insgesamt kann dadurch ein im Wesentlichen zylindrisches Filtergehäuse vollständig ausgefüllt werden, wenn der Filterring und die zweite Generatorstufe so ausgebildet sind, dass die zweite Generatorstufe den Innenraum des Filterrings zumindest im Wesentlichen vollständig ausfüllt. Hierdurch ergibt sich ein besonders kompakter Gasgenerator von relativ geringer Baugröße.

Falls die Filtereinheit die zweite Generatorstufe ringförmig umgibt und gleichzeitig auf dem Druckgehäuse der ersten Generatorstufe aufliegt, so können Ausströmöffnungen der Druckgehäuse beider Generatorstufen in zur Filtereinheit benachbarten Gehäusebereichen angeordnet sein, so dass die Gase direkt einem solchen Filterring zugeführt werden können.

Das Druckgehäuse der ersten Generatorstufe kann nach einer weiteren bevorzugten Ausführungsform Ausströmöffnungen besitzen, die unterhalb der Filtereinheit liegen.

Nach einer weiteren vorteilhaften Ausführungsform kann jedes Druckgehäuse über eigene Ausströmöffnungen direkt mit einem die Filtereinheit enthaltenden Raum in Verbindung stehen. Auf diese Weise sind die beiden Generatorstufen völlig unabhängig voneinander und können insbesondere - zumindest prinzipiell - jeweils alleine gezündet werden, ohne dass aus dem Druckgehäuse der einen Generatorstufe strömende Gase durch die andere Generatorstufe geführt werden müssten, was grundsätzlich das Risiko einer unerwünschten "sympathetic ignition" der anderen Generatorstufe in sich birgt.

Nach einer alternativen Ausführungsform kann eine der beiden Generatorstufen ausschließlich mittelbar über die andere Generatorstufe mit einem die Filtereinheit enthaltenden Raum in Verbindung stehen. Eine oder mehrere Verbindungsöffnungen sind dabei bevorzugt in einer gemeinsamen Wand der beiden Druckgehäuse ausgebildet.

Vorzugsweise besitzt das Druckgehäuse der zweiten Generatorstufe radiale Ausströmöffnungen. Dies ist insbesondere dann von Vorteil, wenn die Filtereinheit ringförmig ausgebildet ist und die zweite Generatorstufe zumindest teilweise umgibt, da dann das aus der zweiten Generatorstufe ausströmende Gas radial in die Filtereinheit strömen kann.

Die Zünder der beiden Generatorstufen können an einer gemeinsamen Bodenplatte befestigt sein, was die Herstellung des Gasgenerators vereinfacht. Zudem wird die Stabilität des Gasgenerators insgesamt erhöht. Insbesondere können die Zünder in dazu vorgesehene Aussparungen der gemeinsamen Bodenplatte gesteckt und dort befestigt werden.

Es ist ganz besonders vorteilhaft, Schweißverbindungen zwischen die Gehäuse bildenden Bauteilen jeweils durch das gleiche Schweißverfahren zu bilden. In Frage kommt insbesondere Kondensatorentladungsschweißen, Laserschweißen, Reibschweißen oder Widerstandsschweißen. Die Verwendung des gleichen Schweißverfahrens für alle Verbindungen spart Zeit und damit Kosten bei der Herstellung des erfindungsgemäßen Gasgenerators. Je nach verwendetem Verfahren und Geometrie der Generatorstufen können gegebenenfalls sogar mehrere Schweißverbindungen in einem Arbeitsgang gebildet werden.

Vorzugsweise ist das Filtergehäuse als Generatoraußengehäuse ausgebildet. Ein zusätzliches Generatoraußengehäuse entfällt also, was Material und damit Kosten, Gewicht und Einbauraum spart.

Das Filtergehäuse kann gemäß einer vorteilhaften Weiterbildung der Erfindung einen Befestigungsflansch zur Befestigung des Gasgenerators an einem Luftsackmodul aufweisen. Damit kann das Filtergehäuse als Generatoraußengehäuse verwendet werden, ohne dass ein zusätzliches Verbindungsstück zur Befestigung am Luftsackmodul benötigt wird.

Besonders vorteilhaft ist es, wenn Ausströmöffnungen des Filtergehäuses in einem oberen Bereich der Filtereinheit vorgesehen sind. Eine solche Anordnung ist insbesondere dann zu bevorzugen, wenn das Filtergehäuse auch das Generatoraußengehäuse bildet, da für eine optimale Entfaltung des Luftsackmoduls das Gas möglichst weit oben, aber dennoch in radialer Richtung aus dem Gasgenerator ausströmen sollte.

Nach einer weiteren bevorzugten Ausführungsform der Erfindung ist das Filtergehäuse durch den mittels der Generatorstufen erzeugten Gasdruck dehnbar, so dass es eine Druckpufferfunktion unterstützen kann. Durch eine solche Expansion des Filtergehäuses kann der Druck des ausströmenden Gases verringert werden, so dass der Luftsack mit geringerer Wucht aufgeblasen wird als bei einem weniger nachgiebig ausgestalteten Filtergehäuse. Von besonderer Bedeutung ist dies vor allem bei hohen Umgebungstemperaturen, die im Vergleich zu niedrigen Umgebungstemperaturen einen höheren Maximaldruck zur Folge haben, der sich ohne Druckpuffer im Aufblasverhalten des Luftsacks voll niederschlagen würde. Die Dehnbarkeit des Filtergehäuses kann dabei so eingestellt werden, dass das Aufblasverhalten von der Umgebungstemperatur weniger abhängig wird, sich der Luftsack also im Sommer nicht zu "aggressiv" und im Winter "dynamisch" genug verhält. Hierbei ist auch zu beachten, dass bestehende Vorschriften eine einwandfreie Funktionsweise bei gleichzeitiger Einhaltung der Sicherheitsbedingungen über einen Temperaturbereich von -35°C bis +85°C verlangen, d.h. der Gasgenerator auch für sehr niedrige Temperaturen ausgelegt sein muss. Die Druckpufferfunktion des Filtergehäuses stellt insbesondere sicher, dass bei sehr hohen Temperaturen die erhöhte Druckentwicklung nicht zu einem Bersten des Filtergehäuses führt.

Im Folgenden wird die vorliegende Erfindung anhand eines bevorzugten Ausführungsbeispiels und unter Bezugnahme auf die beigefügten Figuren beschrieben, wobei diese zeigen:
- Fig. 1:: einen axialen Schnitt durch einen erfindungsgemäßen Gasgenerator vor dem Zünden und
- Fig. 2:: einen axialen Schnitt durch den Gasgenerator aus Fig. 1 während des Verbrennens der Treibladungen.

Der erfindungsgemäße Gasgenerator ist insgesamt von im Wesentlichen zylindrischer Gestalt.

Eine erste Generatorstufe 20 ist kreisringförmig ausgebildet und liegt im unteren Bereich des Gasgenerators. Zwei ringförmige, koaxial angeordnete Seitenwände und ein kreisringförmiges Oberteil sind einstückig miteinander ausgebildet und bilden gemeinsam mit einer Bodenplatte 46 und einem die Bodenplatte 46 radial überlappenden Trägerring 48 ein Druckgehäuse 26 der ersten Generatorstufe 20.

Die Bodenplatte 46 liegt oberhalb des Trägerrings 48 und radial innerhalb der mit dem Trägerring 48 verschweißten, radial äußeren Seitenwand des Druckgehäuses 26. Die radial innere Seitenwand ist mit der Bodenplatte 46 verschweißt.

Zur Montage des Gasgenerators wird in diesem Fall zunächst die bereits mit den beiden Zündern 22, 32 versehene Bodenplatte 46 auf die mit einer Treibladung gefüllte Brennkammer 24 mit dem Druckgehäuse 26 gesetzt, wobei am Außenrand der Bodenplatte 46 eine Isolierung z.B. in Form eines Luftspalts vorgesehen ist. Im folgenden Schritt wird der Trägerring 48 auf die Bodenplatte 46 gelegt und mit einem Kondensatorentladungs-(KE)-Schweißverfahren an dieser verschweißt. Als nächstes wird das Druckgehäuse 26 mit seiner radial äußeren Wand mit dem Trägerring 48 ebenfalls mit einem KE-Schweißverfahren verschweißt. Anschließend werden dann die durch ein Deckelelement 39 komplettierten beiden Generatorstufen 20, 30 und die Filtereinheit 50 in das Filtergehäuse 56 gepresst, das dann mit der Außenseite der radial äußeren Seitenwand des Gehäuses 26 verschweißt wird. Anstelle eines KE-Schweißverfahrens kann bei den vorhergehenden Schritten ein Laserschweißverfahren oder ein anderes geeignetes Schweißverfahren eingesetzt werden.

Das Innere des Gehäuses 26 der ersten Generatorstufe 20 bildet eine kreisringförmige Brennkammer 24, in der eine in der Figur nicht dargestellte Treibladung in Form von gepressten Brennstoffpellets gelagert ist. Zwischen der Bodenplatte 46 und dem Trägerring 48 befindet sich eine in der Figur nicht dargestellte Ringdichtung zur Abdichtung der ringförmigen Brennkammer 24.

Alternativ kann anstelle dieser zweiteiligen Anordnung aus Bodenplatte 46 und Trägerring 48 eine einstückige, gestuft ausgebildete Bodenplatte mit einem - bei Orientierung gemäß der Figur - axial nach unten versetzten äußeren Randbereich vorgesehen sein, wobei die radial äußere Seitenwand des Gehäuses 26 mit dem Randbereich und die radial innere Seitenwand des Gehäuses 26 mit dem zentralen Bereich der Bodenplatte verschweißt wird. Auf zusätzliche Maßnahmen zur Abdichtung der Brennkammer 24 kann hierbei verzichtet werden.

Nach einer weiteren Alternative kann die Bodenplatte auch einstückig und nicht gestuft ausgebildet und z.B. vor der Montage eben sein. Bei dieser Variante ist die radial äußere Seitenwand des Gehäuses 26 in axialer Richtung gegenüber der radial inneren Seitenwand des Gehäuses 26 zurückgesetzt ausgebildet. Beim Zusammenbau des Gasgenerators kann zunächst die radial innere Seitenwand des Gehäuses 26 mit der Bodenplatte 46 z.B. mit Hilfe eines KE-Schweißverfahrens verschweißt werden, wobei zwischen der radial äußeren Wand und der Bodenplatte ein Luftspalt zur Isolation verbleibt. In einem nächsten Schritt wird dann die Bodenplatte 46 an das Gehäuse 26 gepresst, so dass sie sich an ihren radial äußeren Rändern nach oben biegt und die radial äußere Wand des Gehäuses 26 berührt. Entlang dieser Berührungslinie kann die Bodenplatte 46 nun wiederum z.B. mit Hilfe eines KE-Schweißverfahrens verschweißt werden. Die Bodenplatte 46 kann im fertig montierten Zustand leicht gewölbt sein und außen in einen Befestigungsflansch übergehen.

In allen Fällen kann durch entsprechende Dimensionierung der Bauteile sichergestellt werden, dass diese im durch das Verschweißen geschlossenen Zustand in axialer Richtung zusammengedrückt sind bzw. unter Spannung stehen.

Ein Deckelelement 39 in Form eines unten offenen Kreiszylinders liegt auf dem Druckgehäuse 26 der ersten Generatorstufe 20 auf und ist an Schweißstellen 60 mit diesem verbunden. Das Deckelelement 39 ist konzentrisch zu dem Druckgehäuse 26 der ersten Generatorstufe 20 angeordnet, wobei der Durchmesser des Deckelelements 39 größer ist als der Durchmesser der zentralen Öffnung der kreisringförmigen ersten Generatorstufe 20 und etwas mehr als die Hälfte des Außendurchmessers der ersten Generatorstufe 20 beträgt.

Das Deckelement 39 bildet gemeinsam mit der radial inneren Seitenwand sowie einem Teil der Oberseite des Druckgehäuses 26 der ersten Generatorstufe 20 ein Druckgehäuse 36 für eine zweite Generatorstufe 30, d.h. die beiden Generatorstufen 20, 30 bzw. deren Druckgehäuse 26, 36 besitzen einen gemeinsamen Wandbereich 62. Die Bodenplatte 46 ist ebenfalls beiden Druckgehäusen 26, 36 gemeinsam. Die zentrale Öffnung der kreisringförmigen ersten Generatorstufe 20 und der Innenraum des Deckelelements 39 selbst bilden eine Brennkammer 34 der zweiten Generatorstufe 30, in der sich eine zweite ebenfalls nicht dargestellte Treibladung in Form von gepressten Brennstoffpellets befindet.

Insgesamt besitzt die zweite Generatorstufe 30 bzw. deren Druckgehäuse 36 einen T- oder pilzförmigen Längsschnitt, wobei der Querbalken des T durch das Deckelelement 39 gebildet wird.

Bei der Montage des erfindungsgemäßen Gasgenerators erfolgt die Herstellung der Schweißverbindungen 60 bevorzugt durch Kondensatorentladungsschweißen, wobei ausschließlich dieses Schweißverfahren zum Einsatz kommt, für das der vorstehend erläuterte Aufbau des Gasgenerators besonders geeignet ist. Hierdurch wird eine besonders einfache und kostengünstige Massenfertigung des Gasgenerators ermöglicht. Eine Herstellung der Verbindungen teilweise oder ausschließlich mittels Laserschweißen ist ebenfalls denkbar.

In beiden Druckgehäusen 26, 36 ist jeweils ein Zünder 22, 32 angeordnet. Beide Zünder 22, 32 sind in dazu bestimmte kreisförmige Aussparungen der gemeinsamen Bodenplatte 46 eingesetzt und dort befestigt. Der Zünder 32 der zweiten Generatorstufe 30 sitzt im Zentrum der gemeinsamen Bodenplatte 46 und folglich mittig in Bezug auf beide Generatorstufen 20, 30 und damit auf den Gasgenerator insgesamt.

Auf dem Druckgehäuse 26 der ersten Generatorstufe 20 liegt eine ebenfalls ringförmige Filtereinheit 50 auf. Die Filtereinheit 50 und die beiden Generatorstufen 20, 30 sind koaxial ausgerichtet und besitzen somit eine gemeinsame Mittelachse 64, wobei der Außendurchmesser der ringförmigen Filtereinheit 50 im Wesentlichen dem Außendurchmesser der ersten Generatorstufe 20 entspricht. Innendurchmesser und Höhe der ringförmigen Filtereinheit 50 wiederum entsprechen im Wesentlichen dem Außendurchmesser und der Höhe des Deckelelements 39, so dass die zentrale Öffnung der Filtereinheit 50 vollständig von der zweiten Generatorstufe 30 ausgefüllt ist.

Zwischen der Filtereinheit 50 und der ersten Generatorstufe 20 befindet sich im Filterraum 54 ein kreisringförmiges Umlenkelement 59 aus einem dünnen Blech, dessen Ringbreite im Wesentlichen dem der Filtereinheit 50 entspricht. Der Zweck dieses Umlenkelementes 59 wird später näher erläutert.

Die beiden Generatorstufen 20, 30 und die Filtereinheit 50 befinden sich zu einem Großteil in einem Filtergehäuse 56, welches unten offen ist und bereits vor Erreichen der Bodenplatte 46 in einen radialen Flansch 44 zum Befestigen des Gasgenerators an einem Luftsackmodul übergeht.

Das Filtergehäuse 56 besitzt eine im Wesentlichen zylindrische Form und ist von den beiden Generatorstufen 20, 30 und der Filtereinheit 50 praktisch vollständig ausgefüllt. Oben und an ihrer radialen Außenseite grenzt die Filtereinheit 50 nicht direkt an das Filtergehäuse 56, sondern es ist jeweils ein schmaler Zwischenraum vorgesehen.

Das Filtergehäuse 56 ist ausschließlich mit der radial äußeren Wand des ringförmigen Gehäuses 26 verschweißt. An der Oberseite des Deckelelementes 39 dagegen liegt das Filtergehäuse 56 lediglich mit seiner Oberseite an, so dass sich die Oberseite des Filtergehäuses 56 aufgrund eines im Filterraum 54 entstehenden Gasdrucks vom Deckelelement 39 weg bewegen, d.h. sich das Filtergehäuse 56 ausdehnen kann. Hierdurch kann das Filtergehäuse 56 insbesondere die im Einleitungsteil erläuterte Druckpufferfunktion erfüllen.

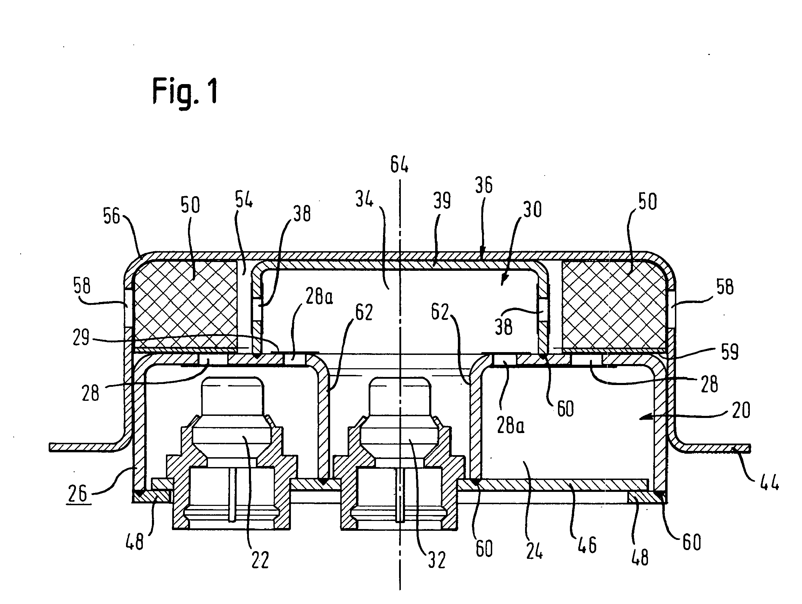

Das Druckgehäuse 26 der ersten Generatorstufe 20 besitzt Ausströmöffnungen 28, welche in der Oberseite des Druckgehäuses 26 in regelmäßigen Abständen angeordnet sind. Die Ausströmöffnungen 28 liegen in radialer Richtung gesehen etwas außermittig nach innen versetzt unterhalb des seinerseits unterhalb der ringförmigen Filtereinheit 50 angeordneten Umlenkelementes 59. Im in der Fig. 1 dargestellten Zustand vor der Zündung der Treibladung(en) sind die Ausströmöffnungen 28 von dem Umlenkelement 59 überdeckt.

Das Druckgehäuse 36 der zweiten Generatorstufe 30 besitzt nach einer möglichen Ausführungsform ausschließlich radiale Ausströmöffnungen 38, welche in dem Deckelelement 39 vorgesehen sind. Die Ausströmöffnungen 38 sind in Umfangsrichtung gleichmäßig beabstandet und münden direkt in den die ringförmige Filtereinheit 50 enthaltenden Innenraum 54 des Filtergehäuses 56, wobei die ringförmige Filtereinheit 50 direkt vor den Ausströmöffnungen 38 liegt.

Nach einer alternativen Ausführungsform können anstelle der Ausströmöffnungen 38 im Druckgehäuse 36 der zweiten Generatorstufe 30 Verbindungsöffnungen 28a, die eine Verbindung zwischen den beiden Generatorstufen 20, 30 herstellen, vorgesehen sein. Diese liegen in dem beiden Druckgehäusen 26, 36 gemeinsamen Teil 62 der Oberseite des ringförmigen Druckgehäuses 26 und verbinden den oberen Bereich der zweiten Generatorstufe 30 mit der ersten Generatorstufe 20. In Richtung der Brennkammer 34 der zweiten Generatorstufe 30 sind die Verbindungsöffnungen 28a von einem Stahlband 29 abgedeckt.

In den Figuren sind zur Veranschaulichung der beiden Varianten sowohl die Verbindungsöffnungen 28a als auch die Ausströmöffnungen 38 des Druckgehäuses 36 der zweiten Generatorstufe 30 dargestellt, es handelt sich bevorzugt aber um zwei alternative Ausführungsformen, wobei es jedoch prinzipiell auch möglich ist, beide Varianten zu kombinieren.

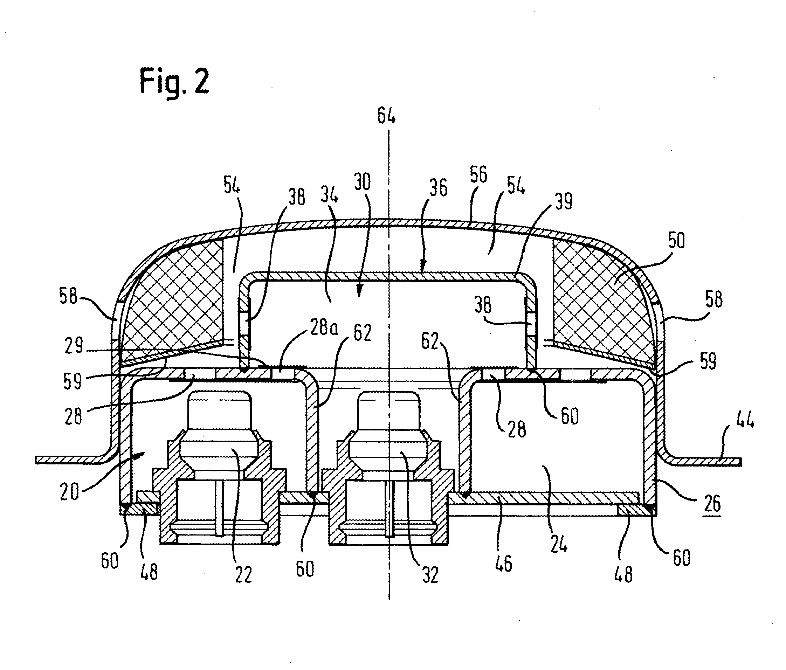

In der Fig. 2 ist der Gasgenerator aus Fig. 1 dargestellt, nachdem die erste und eventuell auch die zweite Generatorstufe gezündet worden ist. Durch das durch die Ausströmöffnungen 28 ausströmende Gas wird das Umlenkelement 59 angehoben und die Filtereinheit 50 verformt, wie im folgenden noch genauer erläutert werden wird. Zudem dehnt sich durch den im Filterraum 54 herrschenden Druck das gesamte Filtergehäuse 56 aus.

Je nachdem, ob in der gemeinsamen Wand 62 der beiden Druckgehäuse 26, 36 Verbindungsöffnungen 28a vorgesehen sind oder nicht, sind verschiedene Zündszenarien denkbar.

In beiden Fällen kann die erste Generatorstufe 20 alleine gezündet werden. Hierbei strömt das in der Brennkammer 24 der ersten Generatorstufe 20 entstehende Gas durch die Ausströmöffnungen 28 an dem durch das Gas angehobenen Umlenkelement 59 vorbei zur ringförmigen Filtereinheit 50, die folglich im Wesentlichen in radialer Richtung von innen nach außen durchströmt wird. Es können weitere nicht dargestellte Gasumlenk- oder -führungseinrichtungen vorgesehen sein, die oberhalb der Ausströmöffnungen 28 in dem Filterraum 54 angeordnet sind und dafür sorgen, dass das Gas radial nach außen - und nicht radial nach innen in Richtung der Ausströmöffnungen 38 der zweiten Generatorstufe 30 ― strömt und dabei die Filtereinheit 50 optimal durchströmt.

Wenn im Druckgehäuse 36 der zweiten Generatorstufe 30 ausschließlich die Ausströmöffnungen 38 vorgesehen sind, dann können die beiden Generatorstufen 20, 30 entweder zeitversetzt oder gleichzeitig gezündet werden. In beiden Fällen strömen die in der zweiten Generatorstufe 30 erzeugten Gase direkt durch die Ausströmöffnungen 38 zur Filtereinheit 50. Die beiden Generatorstufen 20, 30 sind somit insbesondere im Sinne der Vermeidung einer "sympathetic ignition" völlig unabhängig voneinander, und es ist insbesondere auch eine Zündung alleine der zweiten Generatorstufe 30 denkbar. Bevorzugt ist hierbei auf der Außenseite der zweiten Generatorstufe 30 ein die Ausströmöffnungen 38 abdeckendes Stahlband zur Verhinderung eines Überzündens vorgesehen.

Falls hingegen zwischen den beiden Druckgehäusen 26, 36 ausschließlich die Verbindungsöffnungen 28a vorgesehen sind, so gelangen bei einer gleichzeitigen oder zeitversetzten Aktivierung der beiden Zünder 22, 32 die Gase, welche in der zweiten Generatorstufe 30 entstehen, in die erste Generatorstufe 20. Das Stahlband 29 verhindert dabei eine umgekehrte Gasströmung von der ersten Generatorstufe 20 in die zweite Generatorstufe 30, so dass, wenn lediglich die erste Generatorstufe 20 gezündet worden ist, die zweite Generatorstufe 30 nicht unbeabsichtigt mitgezündet wird. Eine "sympathetic ignition" bzw. Überzündung wird somit auch in diesem Fall vermieden. Die in den beiden Generatorstufen 20, 30 entstehenden Gase strömen dann gemeinsam durch die Ausströmöffnungen 28 der ersten Generatorstufe 20 zur Filtereinheit 50.

In jedem der beschriebenen Fälle werden die aus der ersten Generatorstufe 20 ausströmenden Gase von dem Umlenkelement 59 zunächst radial nach innen abgelenkt. Wie in Fig. 2 erkennbar ist, drückt das ausströmende Gas das Umlenkblech 59 radial innen nach oben in Richtung der Filtereinheit 50. Hierdurch wird die Filtereinheit 50 komprimiert und/oder das Filtergehäuse 56 ausgedehnt. Zwischen dem Umlenkelement 59, welches die Filtereinheit 50 nach oben drückt, und der Oberseite des Gehäuses 26 entsteht auf diese Weise im Innenraum 54 des Filtergehäuses 56 ein Luftspalt, durch den das Gas nach oben in den Raum 54 strömt. Je nachdem, wie hoch der Druck ist, unter dem das entstehende Gas in der ersten Generatorstufe 20 steht, wird das Umlenkelement 59 mehr oder weniger stark angehoben. Bei höherem Druck entsteht auf diese Weise ein größerer Spalt mit dementsprechend größerem Strömungsquerschnitt, was dann zu einem Druckabfall und auf Grund der Elastizität insbesondere des Filtergehäuses 56 und/oder der Filtereinheit 50 zu einer Rückfederung des Umlenkelementes 59 führt, was wiederum eine Druckerhöhung und erneute Vergrößerung des Strömungsquerschnitts mit sich bringt. Dadurch wird insgesamt der Druck stabilisiert. Zudem werden die Gase durch das Umlenkelement 59 gezwungen, nicht auf dem kürzesten Weg von den Ausströmöffnungen 28 im Druckgehäuse 26 zu den Ausströmöffnungen 58 im Filtergehäuse 56 zu strömen, sondern in radialer Richtung die gesamte Filtereinheit 50 zu durchqueren, wodurch die Filterwirkung optimiert wird. Ferner stellt das Umlenkelement 59 sicher, dass die Filtereinheit 50 nach oben gegen die Innenseite der oberen Wand des Gehäuses 56 gedrückt wird, wodurch eine unerwünschte Spaltbildung und ein Umströmen der Filtereinheit 50 verhindert werden.

Den Gasgenerator verlassen die erzeugten Gase in jedem Fall durch die in Höhe der Filtereinheit 50 und damit im oberen Bereich des Gasgenerators angeordneten radialen Ausströmöffnungen 58 des Filtergehäuses 56.

### Bezugszeichenliste

- 20: erste Generatorstufe
- 22: Zünder
- 24: Brennkammer
- 26: Druckgehäuse der ersten Generatorstufe
- 28: Ausströmöffnungen der ersten Generatorstufe
- 28a: Verbindungsöffnung
- 29: Stahlband
- 30: zweite Generatorstufe
- 32: Zünder
- 34: Brennkammer
- 36: Druckgehäuse der zweiten Generatorstufe
- 38: Ausströmöffnungen der zweiten Generatorstufe
- 39: Deckelelement
- 44: Flansch
- 46: Bodenplatte
- 48: Trägerring
- 50: Filtereinheit
- 54: Innenraum des Filtergehäuses
- 56: Filtergehäuse
- 58: Ausströmöffnungen des Filtergehäuses
- 59: Umlenkelement
- 60: Schweißstellen
- 62: gemeinsame Druckgehäusewand
- 64: Mittelachse

## Patentansprüche

1. Gasgenerator, insbesondere für Luftsackmodule in Kraftfahrzeugen, mit zwei unabhängig voneinander zündbaren Generatorstufen (20, 30), die jeweils in einem Druckgehäuse (26, 36) wenigstens einen Zünder (22, 32), zumindest eine Treibladung und wenigstens eine Brennkammer (24, 34) umfassen und zumindest teilweise zusammen mit einer gemeinsamen, außerhalb der Druckgehäuse (26, 36) angeordneten Filtereinheit (50) in einem gemeinsamen Filtergehäuse (56) angeordnet sind,
wobei eine erste Generatorstufe (20) kreisringförmig ausgebildet ist und eine zweite Generatorstufe (30) zentral bezüglich der ersten Generatorstufe (20) angeordnet und zumindest teilweise oberhalb der ersten Generatorstufe (20) gelegen ist.

2. Gasgenerator nach Anspruch 1,
**dadurch gekennzeichnet ,**
**dass** die zweite Generatorstufe (30) die Form mehrerer koaxial übereinander angeordneter Zylinder mit unterschiedlichen Radien besitzt.

3. Gasgenerator nach Anspruch 1 oder 2,
**dadurch gekennzeichnet ,**
**dass** die zweite Generatorstufe (30) im Längsschnitt eine Pilz- oder T-Form aufweist.

4. Gasgenerator nach einem der vorstehenden Ansprüche,
**dadurch gekennzeichnet ,**
**dass** wenigstens ein insbesondere ringförmiges Umlenkelement (59) zwischen der Filtereinheit (50) und der ersten Generatorstufe (20) angeordnet ist.

5. Gasgenerator nach einem der vorstehenden Ansprüche,
**dadurch gekennzeichnet ,**
**dass** die zweite Generatorstufe (30) teilweise innerhalb des von der ersten Generatorstufe (20) gebildeten Rings liegt.

6. Gasgenerator nach einem der vorstehenden Ansprüche,
**dadurch gekennzeichnet ,**
**dass** die zweite Generatorstufe (30) den Innenraum des von der ersten Generatorstufe (20) gebildeten Rings vollständig ausfüllt.

7. Gasgenerator nach einem der vorstehenden Ansprüche,
**dadurch gekennzeichnet ,**
**dass** das Volumen der ersten Generatorstufe (20) größer ist als das der zweiten Generatorstufe (30).

8. Gasgenerator nach einem der vorstehenden Ansprüche,
**dadurch gekennzeichnet ,**
**dass** die Druckgehäuse (26, 36) der beiden Generatorstufen (20, 30) wenigstens eine gemeinsame Wand (62) aufweisen.

9. Gasgenerator nach einem der vorstehenden Ansprüche,
**dadurch gekennzeichnet ,**
**dass** das Druckgehäuse (36) der zweiten Generatorstufe (30) von einer Wand des Druckgehäuses (26) der ersten Generatorstufe (20) und von einem insbesondere mittig auf das Druckgehäuse (26) der ersten Generatorstufe (20) aufgesetzten Deckelelement (39) gebildet ist, welches den Innenraum des von der ersten Generatorstufe (20) gebildeten Rings abdeckt.

10. Gasgenerator nach einem der vorstehenden Ansprüche,
**dadurch gekennzeichnet ,**
**dass** die Filtereinheit (50) und die beiden Generatorstufen (20, 30) das Filtergehäuse (56) zumindest im Wesentlichen vollständig ausfüllen.

11. Gasgenerator nach einem der vorstehenden Ansprüche,
**dadurch gekennzeichnet ,**
**dass** die Filtereinheit (50) oberhalb der ersten Generatorstufe (20) angeordnet ist und insbesondere auf deren Druckgehäuse (26) aufliegt.

12. Gasgenerator nach einem der vorstehenden Ansprüche,
**dadurch gekennzeichnet ,**
**dass** die Filtereinheit (50) ringförmig ausgebildet ist und die zweite Generatorstufe (30) umgibt.

13. Gasgenerator nach Anspruch 12,
**dadurch gekennzeichnet ,**
**dass** die zweite Generatorstufe (30) den Innenraum des Filterrings (50) zumindest im Wesentlichen vollständig ausfüllt.

14. Gasgenerator nach einem der vorstehenden Ansprüche,
**dadurch gekennzeichnet ,**
**dass** das Druckgehäuse (26) der ersten Generatorstufe (20) Ausströmöffnungen (28) besitzt, welche unterhalb der Filtereinheit (50) liegen.

15. Gasgenerator nach einem der vorstehenden Ansprüche,
**dadurch gekennzeichnet ,**
**dass** jedes Druckgehäuse (26, 36) über eigene Ausströmöffnungen (28, 38) direkt mit einem die Filtereinheit (50) enthaltenden Raum (54) in Verbindung steht.

16. Gasgenerator nach einem der Ansprüche 1 bis 14,
**dadurch gekennzeichnet ,**
**dass** eine der beiden Generatorstufen (30) ausschließlich oder zusätzlich mittelbar über die andere Generatorstufe (20) mit einem die Filtereinheit (50) enthaltenden Raum (54) in Verbindung steht, wobei bevorzugt in einer gemeinsamen Wand (62) der Druckgehäuse (26, 36) wenigstens eine Verbindungsöffnung (28a) ausgebildet ist.

17. Gasgenerator nach einem der vorstehenden Ansprüche,
**dadurch gekennzeichnet ,**
**dass** das Druckgehäuse (36) der zweiten Generatorstufe (30) radiale Ausströmöffnungen (38) besitzt.

18. Gasgenerator nach einem der vorstehenden Ansprüche,
**dadurch gekennzeichnet ,**
**dass** die Zünder (22, 32) der Generatorstufen (20, 30) an einer gemeinsamen Bodenplatte (46) befestigt sind.

19. Gasgenerator nach einem der vorstehenden Ansprüche,
**dadurch gekennzeichnet ,**
**dass** alle Schweißverbindungen (60) zwischen die Druckgehäuse (26, 36) bildenden Bauteilen durch das gleiche Schweißverfahren, insbesondere durch Kondensatorentladungsschweißen oder Laserschweißen, gebildet sind.

20. Gasgenerator nach einem der vorstehenden Ansprüche,
**dadurch gekennzeichnet ,**
**dass** das Filtergehäuse (56) als Generatoraußengehäuse ausgebildet ist.

21. Gasgenerator nach einem der vorstehenden Ansprüche,
**dadurch gekennzeichnet ,**
**dass** das Filtergehäuse (56) einen Befestigungsflansch (44) zur Befestigung an einem Luftsackmodul aufweist.

22. Gasgenerator nach einem der vorstehenden Ansprüche,
**dadurch gekennzeichnet ,**
**dass** Ausströmöffnungen (58) des Filtergehäuses (56) auf der Höhe der Filtereinheit (50) vorgesehen sind.

23. Gasgenerator nach einem der vorstehenden Ansprüche,
**dadurch gekennzeichnet ,**
**dass** das Filtergehäuse (56) insbesondere zur Unterstützung einer Druckpufferfunktion durch den mittels der Generatorstufen (20, 30) erzeugbaren Gasdruck ausdehnbar ausgebildet ist.
